# EUROPÄISCHE PATENTSCHRIFT

(11) **EP 1 323 225 B1**
(45) Veröffentlichungstag und Bekanntmachung des Hinweises auf die Patenterteilung: **07.07.2010**
(21) Anmeldenummer: 01978177.2
(22) Anmeldetag: 21.09.2001
(51) Int. Cl.: H02K 21/16, H02K 3/24

(54) **ELEKTRISCHE MASCHINE**
ELECTRICAL MACHINE
MACHINE ELECTRIQUE

(30) Priorität: 21.09.2000 DE 10047108
(43) Veröffentlichungstag der Anmeldung: 02.07.2003
(73) Patentinhaber: ROBERT BOSCH GMBH, 70442 Stuttgart (DE)
(72) Erfinder: REUTLINGER, Kurt, 70174 Stuttgart (DE)
(74) Vertreter: Zöllner, Hartmut
(86) Internationale Anmeldenummer: PCT/DE2001/003650
(87) Internationale Veröffentlichungsnummer: WO 2002/025796

(56) Entgegenhaltungen:
- EP-A- 0 638 457
- EP-A- 1 014 542
- DE-A- 19 920 309
- US-A- 5 304 882
- US-A- 5 825 113
- US-A- 6 008 614

## Beschreibung

### Stand der Technik

Die Erfindung betrifft eine elektrische Maschine nach der Gattung des unabhängigen Patentanspruchs. Aus der US-Patentschrift 6 163 128 ist ein Verfahren zur Ansteuerung von elektrischen Maschinen bekannt, durch das elektrische Maschinen im Feldschwächebetrieb betrieben werden können. Es wird zwar angegeben, dass Synchronmaschinen mit einem permanentmagnetisch erregten Rotor und einer Statorwicklung derartig angesteuert werden können. Näheres ist zu der elektrischen Maschine jedoch nicht angegeben.

### Vorteile der Erfindung

Die erfindungsgemäße elektrische Maschine mit den Merkmalen des Hauptanspruchs hat den Vorteil, dass durch die spezielle Ausbildung des Stators die Hauptfeldinduktivität besonders hoch ist und sich daher in besonderem Maße für einen Feldschwächebetrieb eignet. Der Kurzschlussstrom kann bei dieser Wicklungsgeometrie soweit reduziert werden, dass er in der Größenordnung vom Nennstrom liegt und somit einen theoretisch unendlichen Feldschwächebereich ermöglicht. Die Nullinduktivität der Maschine wird bei dieser Anordnung verschwindend klein.
Damit ein Zahn des Stators den vollen Fluss eines Permanentmagneten beziehungsweise des Rotors nutzt, ist vorgesehen, die Spulenweite einer Spule nicht größer als eine Polteilung auszuführen.
Prinzipbedingt sind dann offene Nuten mit einer Mindestöffnung von einem Drittel der Polteilung vorhanden. Dadurch wird entweder einerseits die Wicklungstechnik vereinfacht oder andererseits können vorgefertigte Spulen in die offenen Nuten eingesetzt werden.

Durch die in den Unteransprüchen aufgeführten Maßnahmen sind vorteilhafte Weiterbildungen der elektrischen Maschine nach dem Hauptanspruch möglich.

Die feldorientierte Regelung führt dazu, dass die Maschine das besonders günstige Verhalten - insbesondere der Regelbarkeit - einer Gleichstrommaschine erhält. Hierdurch kann der feldbildende Längsstrom und der drehmomentbildende Querstrom getrennt voneinander geregelt werden und die Maschine kann nicht mehr kippen.
Bei permanenterregten Maschinen wird im Grunddrehzahlbereich der Längsstrom in der Maschine zu Null geregelt. Dadurch erzeugt die Maschine das geforderte Drehmoment mit dem minimalen Strom und damit den kleinsten Maschinenverlusten.

Der Feldschwächebtrieb führt dazu, dass die elektrische Maschine oberhalb einer Drehzahl möglich ist, bei der die Klemmenspannung der Maschine den maximalen Wert der Umrichterspannung erreicht.

Durch die Anordnung von je einer Spulenseite in je einer Nut bei sonst beispielsweise gleichbleibenden Maßen, kann die Induktivität der Maschine weiter erhöht werden, so dass ein kleinerer Feldschwächestrom nötig ist und dadurch die Belastung der Maschine sinkt.

Führt man durch zumindest eine Nut ein Kühlmedium hindurch, so ergibt sich eine besonders gute und effektive Kühlung der Spulen. Eine besonders effektive Kühlung wird dann erreicht, wenn hier Kühlkanäle für Kühlflüssigkeit untergebracht sind, die durch direkten oder indirekten Kontakt zu den Kupferleitern die Wärme unmittelbar abführen.

Führt man die Maschine so aus, dass ein Luftspalt zwischen dem Rotor und einem Zahn des Stators in Richtung der peripheren Enden des Zahns aufgeweitet ist, so wird das Rastmoment zwischen Rotor und Stator reduziert. Das Rastmoment führt dazu, dass der Drehmomentenverlauf zwischen dem Rotor und dem Stator ungleichmäßig ist, dadurch niederfrequente Schwingungen entstehen, die zu Vibrationen der elektrischen Maschine und der benachbarten Bauteile führen. Eine Verringerung des Rastmoments führt demzufolge zu einer Verbesserung des Fahrkomforts beziehungsweise einem runderen Drehmomentverlauf. Durch das verringerte Rastmoment werden aber darüber hinaus auch höherfrequente Schwingungen und damit Geräusche vermieden. Führt man die Zahnbreite eines einzelnen Zahns des Stators in Umfangsrichtung zwischen 2/3 einer Polteilung und einer vollen Polteilung aus, so wird auch über diese Maßnahme das Rastmoment mit den begleitenden Nachteilen vermieden.

### Zeichnungen

In den Zeichnungen sind Ausführungsbeispiele der erfindungsgemäßen elektrischen Maschine dargestellt.
Figur 1 zeigt eine schematische Ansicht der elektrischen Maschine,
Figur 2 zeigt ein erstes Ausführungsbeispiel der Anordnung der Spulen im Stator,
Figur 3 zeigt ein zweites Ausführungsbeispiel der Spulen im Stator,
Figur 3A zeigt Details zu den Ausbildungen des Luftspalts zwischen Rotor und Stator,
Figur 4 zeigt ein vereinfachtes Ersatzschaltbild der elektrischen Maschine,
Figur 5 zeigt ein Zeigerdiagramm für das vereinfachte Ersatzschaltbild der elektrischen Maschine,
Figur 6 zeigt ein Zeigerdiagramm für eine Spannung in der Mehrphasenwicklung, die größer ist als die maximale Umrichterspannung,
Figur 7 zeigt ein Zeigerdiagramm für ein allgemeinen Betriebspunkt mit geringerer Leistung als der Grenzleistung,
Figur 8 zeigt ein Zeigerdiagramm für eine Spannung in der Mehrphasenwicklung, die sehr viel größer ist als die maximale Umrichterspannung,
Figur 9 zeigt die Gesamtanordnung der elektrischen Maschine, die über den Umrichter an einen Zwischenkreis angeschlossen ist.

### Beschreibung

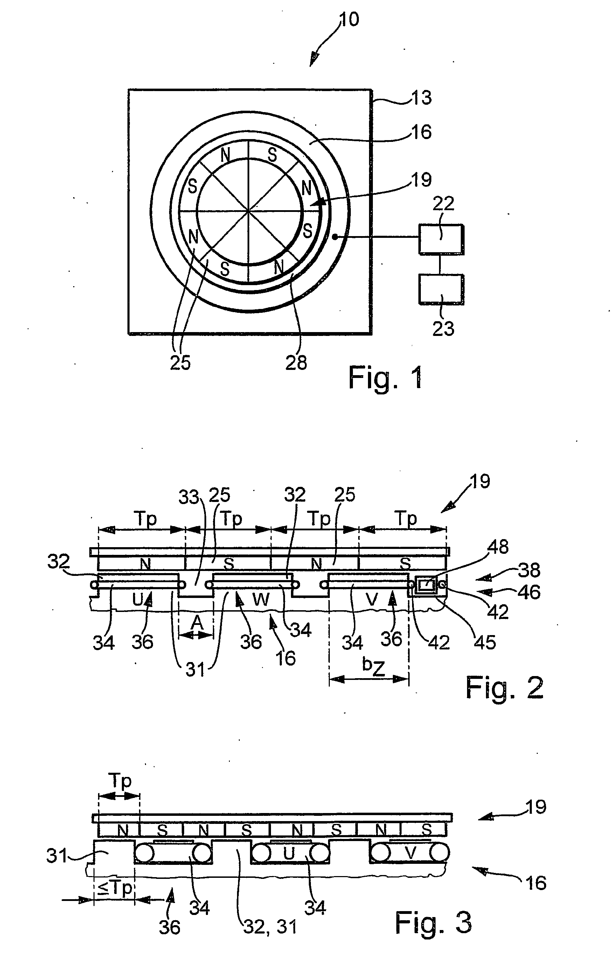

In Figur 1 ist eine elektrische Maschine 10 dargestellt, die in einem Gehäuse 13 einen Stator 16 trägt. Innerhalb des Stators 16 ist ein permanentmagnetisch erregter Rotor 19 angeordnet. Der Stator 16 ist durch einen Umrichter 22 ansteuer- beziehungsweise regelbar, der wiederum durch eine Steuer- bzw. Regeleinrichtung (23) beeinflussbar ist. Der Rotor 19 trägt an seinem Umfang mehrere Permanentmagneten 25, wobei die Permanentmagneten 25 so angeordnet sind, dass sich an der zum Stator 16 gerichteten Oberfläche des Rotors 19 Nordpole und Südpole abwechseln. Zwischen der zylindrischen Oberfläche des Rotors 19 und der Oberfläche des Stators 16 befindet sich ein Luftspalt 28.

Figur 2 zeigt eine gestreckte Darstellung, das heißt Abwicklung der zueinander gerichteten Bereiche des Rotors 19 und des Stators 16. In diesem Ausführungsbeispiel stehen sich vier durch die Permanentmagneten 25 gebildeten Pole des Rotors 19 und durch drei Zähne 31 gebildete Pole 32 des Stators 16 gegenüber. Die drei Zähne 31 tragen jeweils eine Spule 34 einer Phasenwicklung 36. Alle drei Phasenwicklungen 36 bilden zusammen eine Mehrphasenwicklung 38, die in diesem Fall eine Drehstromwicklung darstellt. Die Phasenwicklungen 36 weisen die üblichen Bezeichnungen für eine Drehstromwicklung U, W und V auf. Im Beispiel sind in je einer Nut 33 je zwei Spulenseiten 42 andersphasiger Spulen 34 angeordnet.

Eine Zahnbreite b_{z} ist im Beispiel etwas kleiner als eine Polteilung Tₚ. Der Abstand A zwischen zwei Zähnen 31 ist demzufolge etwas größer als 1/3 einer Polteilung Tₚ.

Allgemein formuliert weist der Stator 16 der elektrischen Maschine 10 eine Polzahl auf, die einem n-fachen der Anzahl von Phasen einer Mehrphasenwicklung 38 im Stator 16 entspricht. Dabei besteht eine jede Phasenwicklung 36 aus zumindest einer Spule 34, die im Stator 16 nebeneinander angeordnet sind. Der Rotor 19 weist eine Polzahl auf, die einem n-fachen der Zahl 4 entspricht. n ist eine sich von Null unterscheidende ganze Zahl. Ein Pol 32 des Stators 16 hat eine maximale Breite einer Polteilung Tp und der Abstand A zweier Pole 32 des Stators 16 entspricht mindestens einem Drittel der Polteilung Tp.

Zwischen zwei Zähnen 31 befindet sich durch eine Nut 33 ein Durchlass für ein Kühlmedium, beispielsweise kann hier Kühlluft strömen. In der selben Figur 2 ist ganz rechts eine Kühlalternative dargestellt. Im Beispiel befindet sich zwischen zwei benachbarten andersphasigen Spulenseiten 42 ein Kühlrohr 45 eines Flüssigkeitskühlsystems 46, das zwischen diesen beiden Spulenseiten 42 angeordnet ist und in seinem Inneren eine Kühlflüssigkeit 48 führt.

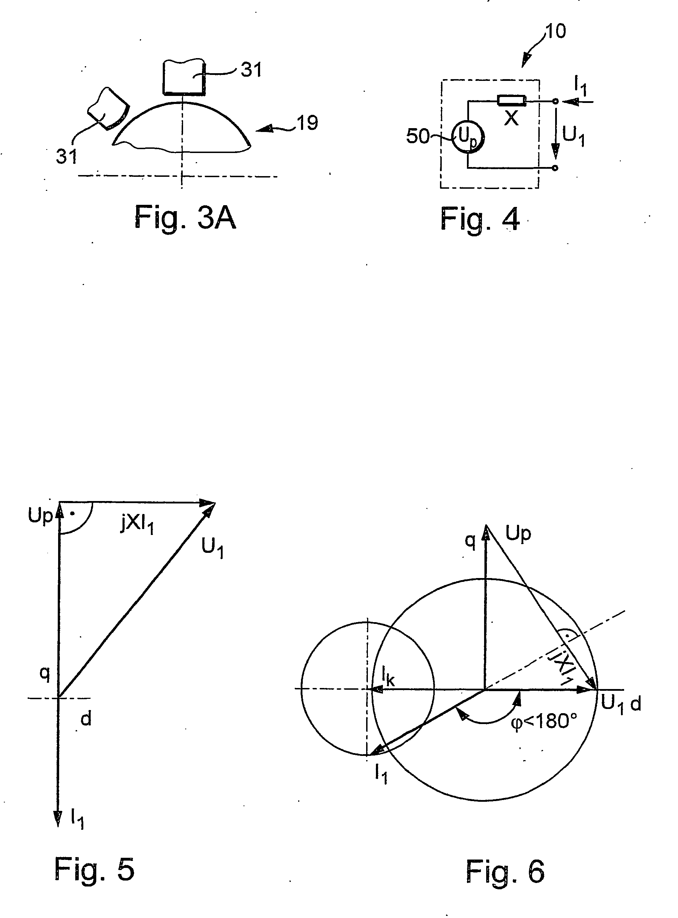

In Figur 3 ist ein zweites Ausführungsbeispiel des Stators 16 und des Rotors 19 dargestellt. In diesem Ausführungsbeispiel stehen sich je acht Permanentmagnete 25 des Rotors 19 und sechs Zähne 31 des Stators 16 gegenüber. In Abwandlung zum ersten Ausführungsbeispiel trägt hier jedoch nur noch jeder zweite Zahn 31 eine Spule 34, so dass in je einer Nut 33 eine Spulenseite 42 einer Spule 34 angeordnet ist.

In Figur 3A ist ein Detail bei der Ausbildung der Zähne 31 dargestellt. Um möglichst geringe Rastmomente zu halten, ist es günstig, wenn der Luftspalt 28 zwischen einem Zahn 31 und der zylindrischen Oberfläche des Rotors 19 in Richtung der peripheren Enden des Zahns 31 aufgeweitet ist. Im ersten Ausführungsbeispiel - auf der linken Seite der Figur 3A - weist der Zahn 31 eine zur Oberfläche des Rotors 19 gekrümmte Oberfläche auf. Dadurch ist der Abstand in der Mitte des Zahns 31 zum Rotor 19 kleiner als an den seitlichen Enden des Zahns 31. Im zweiten Ausführungsbeispiel der Figur 3A weist der Zahn 31 eine gerade Oberfläche auf, so dass auch hier der Abstand zwischen dem Zahn 31 und dem Rotor 19 in der Mitte des Zahns am kleinsten ist. Der Spalt zwischen einem Zahn 31 und dem Rotor 19 ist dann am günstigsten ausgebildet, wenn das Magnetfeld im Luftspalt einen sinusartigen Verlauf aufweist.

Im motorischen Betrieb werden permanenterregte Drehfeldmaschinen überwiegend an Umrichtern 22 betrieben. Durch gezieltes Schalten von Brückenventilen des Umrichters 22 wird dabei der Maschine 10 ein geeignetes Mehrphasensystem angeboten.

Hierbei gibt es eine Vielzahl unterschiedlicher Ansteuerverfahren. Meist wird jedoch der Strom in Abhängigkeit von der Rotorlage geregelt. Bei der feldorientierten Regelung wird der Statorstrom so eingestellt, dass er das maximale Moment erzeugt. Dies bedeutet, dass in der Maschine 10 eine Durchflutung erzeugt wird, die senkrecht zum Rotorfeld steht. Die feldorientierte Regelung findet unterhalb einer maximalen Ausgangsspannung des Umrichters 22 statt.

In Figur 4 ist das vereinfachte Ersatzschaltbild der Maschine 10 dargestellt. Die elektrische Maschine 10 ist dabei auf einen induktiven Blindwiderstand X reduziert, der innerhalb der Maschine 10 einer die Mehrphasenspannung Up erzeugenden Spannungsquelle 50 in Reihe geschaltet ist. Eine Spannung U1 entspricht der Klemmenspannung die sich bei einem vom Umrichter 22 eingespeisten Strom einstellt.

In Figur 5 ist das zugehörige Zeigerdiagramm für die elektrische Maschine 10 gemäß Figur 4 dargestellt, hier ist die Darstellung für den Generatorbetrieb gewählt.

Die beiden Achsen sind mit d und mit q bezeichnet. Dabei ist d die Längsachse (Achse in Richtung der Pole) in der Maschine und q ist die Querachse (senkrecht zur d-Achse).

Der Umrichter 22 kann nur eine maximale Spannung U_{1,max} an den Anschlüssen der Mehrphasenwicklung 38 einstellen. Diese Spannung ist von einer Versorgungsspannung des Umrichters 22 und durch seine innere Schaltung vorgegeben.
Da mit wachsender Drehzahl die vom Rotor erzeugte Spannung Up in der Mehrphasenwicklung 38 der Maschine linear ansteigt, erreicht die Spannung Up ab einer bestimmten Drehzahl die maximale Umrichterspannung und kann den Betrieb mit einem reinem Querstrom I1 nicht mehr realisieren und zu höheren Drehzahlen hin fortsetzen.

Bei höheren Drehzahlen wird ein sogenannter Feldschwächbereich realisiert. Hierbei findet jedoch keine Schwächung des Rotorfeldes statt, sondern es wird im Stator ein zusätzlicher Strom eingespeist, der dem Rotorfeld entgegenwirkt und das Luftspaltfeld zwischen dem Rotor 19 und dem Stator 16 hierdurch reduziert. Die Regelung im Feldschwächebereich findet oberhalb einer maximalen Ausgangsspannung des Umrichters 22 statt.

In Figur 6 ist für eine Ständerspannung Up, die größer ist als die maximale Umrichterspannung U1, das Zeigerdiagramm dargestellt. In diesem Betriebsbereich wird die Umrichterspannung U1 auf ihren Maximalwert eingestellt.

Der Statorstrom wird gedanklich soweit aus der q-Achse herausgedreht, bis sich wieder eine Statorspannung Up ergibt, die der maximalen Umrichterspannung U1 entspricht. Ein Statorstrom (nur bei Pmax gilt Id = Ik) in der d-Achse stellt den Feldschwächstrom dar.
In Figur 6 ist der Punkt maximaler Leistung dargestellt. Diese Leistung ist die Grenzleistung der Maschine bei gegebener Maximalspannung an der Mehrphasenwicklung 38 und kann nicht überschritten werden.

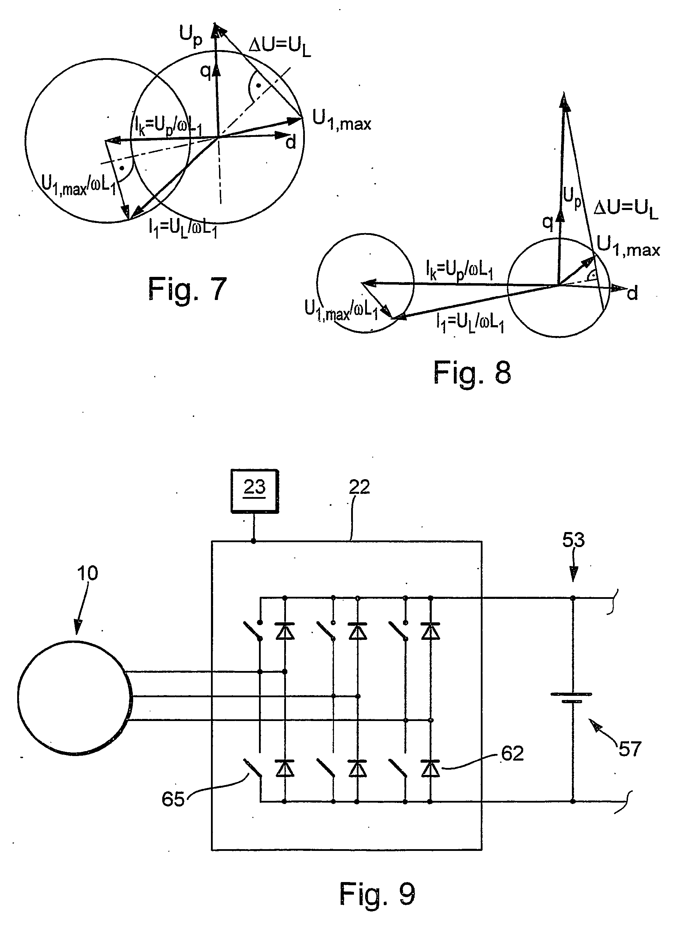

Für einen allgemeinen Betriebspunkt mit geringerer Leistung als der Grenzleistung ergibt sich das Zeigerdiagramm gemäß Figur 7. Darin ist der Blindwiderstand X gleich einer Kreisfrequenz ω multipliziert mit einer Induktivität L der Mehrphasenwicklung 38. Eine Spannungsdifferenz U zwischen der Ständerspannung Up und der maximalen Umrichterspannung U1, max ergibt sich zur Blindspannung UL, die das Produkt aus Blindwiderstand und dem Strom I1 ist.

Bei sehr großen Drehzahlen wird die Statorspannung Up der Maschine viel größer als die maximale Umrichterspannung U1, max, Figur 8. Der erforderliche Feldschwächstrom I1 in der d-Achse nähert sich dann mehr und mehr einem Kurzschlussstrom Iₖ = Uₚ/X der Maschine. Somit ist bei sehr hohen Drehzahlen ein Längsstrom erforderlich, der ungefähr dem Kurzschlussstrom entspricht.
Dieser Feldschwächstrom ist auch im Leerlauf der Maschine 10 in fast derselben Höhe vorhanden.
Somit ist für einen weiten Feldschwächebereich eine Maschine erforderlich, die kurzschlussfest ist. Das bedeutet, dass der Kurzschlussstrom Ik weder zu einer magnetischen noch thermischen Schädigung der Maschine führen darf.

Für eine gute Feldschwächbarkeit ist somit eine Maschine 10 erforderlich, die einen kleinen Kurzschlussstrom Ik aufweist. Kann die Maschine diesen dauernd führen, ist eine Feldschwächung bis prinzipiell unendlich möglich. Somit muss der Kurzschlussstrom Ik der Maschine 10 nahe bei ihrem Nennstrom liegen.

Bei permanenterregten Maschinen im Feldschwächbereich - also bei hohen Drehzahlen - tritt zudem die Schwierigkeit auf, diese Maschinen bei Ausfall des Umrichters 22 in einen sicheren Betriebszustand zu bringen. Wird bei hohen Drehzahlen der Umrichter 22 abgeschaltet, so speist die Maschine 10 mit ihrer hohen Ständerspannung über Rückwärtsdioden des Umrichters 22 in einen Zwischenkreis 53 zurück, siehe auch Figur 9.

Wird der Zwischenkreis 53 aus dem allgemeinen Versorgungsnetz gespeist, so kann dieser meist die Leistung nicht aufnehmen und die Zwischenkreisspannung überschreitet den zulässigen Wert, was zur Zerstörung des Umrichters führen kann. Bei Anwendungen in Fahrzeugen wird der Zwischenkreis 53 durch eine Batterie 57 gebildet. Kommt es hier zu einem Ausfall des Umrichters 22, speist die Maschine 10 über die Rückwärtsdioden in die Batterie (Bordnetz) unkontrolliert Leistung ein und kann dort Schäden verursachen.

Die Folge ist ein starkes Ansteigen einer Zwischenkreisspannung im Umrichter 22.
Wird jedoch die Rückspeisung über die Dioden 62 unterbunden, steigt die Ständerspannung an der Maschine 10 auf den Wert der Polradspannung. Dieser Wert kann unzulässig hohe Werte annehmen und die Isolation in der Maschine durchschlagen. Bei einer Maschine die einen kleinen Kurzschlussstrom Ik besitzt und diesen dauerhaft führen kann, besteht die Möglichkeit die Maschine über die Ventile 65 kurzzuschließen. Somit kann sich keine unzulässige Spannung an den Anschlüssen der Mehrphasenwicklung 38 der Maschine. 10 einstellen und es wird keine Leistung in den Zwischenkreis zurückgespeist, die den Umrichter. 22 gefährdet. Hierzu müssen jedoch die Ventile den Kurzschlussstrom Ik der Maschine führen können, was keine Schwierigkeit darstellt, wenn der Kurzschlussstrom im Bereich des Nennstromes der Maschine liegt.

## Patentansprüche

1. Elektrische Maschine, insbesondere Startergenerator, mit einem permanentmagnetisch erregbaren Rotor (19) und einem Stator (16), wobei der Stator (16) eine Mehrphasenwicklung (38) trägt, mit einem durch eine Regel- bzw. Steuereinrichtung (23) beeinflussbaren Umrichter (22), durch die der Stator (16) im Feldschwächebetrieb betreibar ist, **dadurch gekennzeichnet, dass** der Rotor (19) eine Polzahl aufweist, die einem n-fachen der Anzahl von Phasen der Mehrphasenwicklung (38) im Stator (16) entspricht, wobei eine jede Phasenwicklung (36) aus zumindest einer Spule (34) besteht und alle Spulen (34) der Mehrphasenwicklung (38) im Stator (16) nebeneinander angeordnet sind, und der Rotor (19) eine Polzahl aufweist, die einem n-fachen der Zahl 4 entspricht, wobei ein Pol (32) des Stators (16) eine maximale Breite einer Polteilung (Tp) hat und der Abstand (A) zweier Pole (32) des Stators (16) mindestens einem Drittel der Polteilung (Tp) entspricht.

2. Elektrische Maschine nach Anspruch 1, **dadurch gekennzeichnet, dass** der Stator (16) unterhalb einer maximalen Ausgangsspannung des Umrichters (22) feldorientiert regelbar ist.

3. Elektrische Maschine nach Anspruch 1 oder 2, **dadurch gekennzeichnet, dass** der Stator (16) oberhalb einer maximalen Ausgangsspannung des Umrichters (22) im Feldschwächebetrieb betreibbar ist.

4. Elektrische Maschine nach einem der vorhergehenden Ansprüche, **dadurch gekennzeichnet, dass** in je einer Nut (33) je zwei Spulenseiten (42) andersphasiger Spulen (34) angeordnet sind.

5. Elektrische Maschine nach einem der vorhergehenden Ansprüche 1 bis 4, **dadurch gekennzeichnet, dass** in je einer Nut (33) eine Spulenseite (42) einer Spule (34) angeordnet ist.

6. Elektrische Maschine nach einem der vorhergehenden Ansprüche, **dadurch gekennzeichnet, dass** durch zumindest eine Nut (33) ein Kühlmedium durchleitbar ist.

7. Elektrische Maschine nach einem der vorhergehenden Ansprüche, **dadurch gekennzeichnet, dass** ein Luftspalt (28) zwischen dem Rotor (19) und einem Zahn (31) des Stators (16) in Richtung der peripheren Enden des Zahns (31) aufgeweitet ist.

## Claims

1. Electrical machine, in particular a starter generator, having a rotor (19) which can be excited by permanent magnets and having a stator (16), wherein the stator (16) is fitted with a polyphase winding (38), having a converter (22) which can be influenced by a closed-loop or open-loop control device (23) and by means of which the stator (16) can be operated in the speed variation by field control mode, **characterized in that** the rotor (19) has a number of poles which corresponds to n-times the number of phases of the polyphase winding (38) in the stator (16), wherein each phase winding (36) comprises at least one coil (34) and all the coils (34) of the polyphase winding (38) in the stator (16) are arranged alongside one another, and the rotor (19) has a number of poles which corresponds to n times the number 4, wherein a pole (32) of the stator (16) has a maximum width of one pole pitch (Tp), and the distance (A) between two poles (32) of the stator (16) corresponds to at least one third of the pole pitch (Tp).

2. Electrical machine according to Claim 1, **characterized in that** the stator (16) can be controlled on a field-oriented basis below a maximum output voltage of the converter (22).

3. Electrical machine according to Claim 1 or 2, **characterized in that** the stator (16) can be operated in the speed variation by field control mode above a maximum output voltage of the converter (22).

4. Electrical machine according to one of the preceding claims, **characterized in that** two coil sides (42) of different-phase coils (34) are in each case arranged in a respective slot (33).

5. Electrical machine according to one of the preceding Claims 1 to 4, **characterized in that** one coil side (42) of one coil (34) is arranged in a respective slot (33).

6. Electrical machine according to one of the preceding claims, **characterized in that** a cooling medium can be passed through at least one slot (33).

7. Electrical machine according to one of the preceding claims, **characterized in that** an air gap (28) between the rotor (19) and a tooth (31) on the stator (16) widens in the direction of the peripheral ends of the tooth (31).

## Revendications

1. Machine électrique, en particulier génératrice-démarreur, qui présente
un rotor (19) excité par magnétisation permanente et un stator (16), le stator (16) portant un enroulement polyphasé (38),
un convertisseur (22) sur lequel un dispositif de régulation et de commande (23) peut agir et par lequel le stator (16) peut fonctionner en mode à faible champ, **caractérisée en ce que**
le rotor (19) présente un nombre de pôles qui correspond à un multiple du nombre des phases de l'enroulement polyphasé (38) du stator (16),
**en ce que** l'enroulement (36) de chaque phase est constitué d'au moins une bobine (34),
**en ce que** toutes les bobines (34) de l'enroulement polyphasé (38) du stator (16) sont disposées les unes à côté des autres,
**en ce que** le rotor (19) présente un nombre de pôles qui correspond à un multiple du nombre 4, un pôle (32) du stator (16) présentant une largeur maximale d'une division polaire (Tp) et
**en ce que** la distance (A) entre deux pôles (32) du stator (16) correspond au moins à un tiers de la division polaire (Tp).

2. Machine électrique selon la revendication 1, **caractérisée en ce que** le stator (16) peut être régulé en dessous d'une tension maximale de sortie du convertisseur (22) par l'orientation du champ.

3. Machine électrique selon les revendications 1 ou 2, **caractérisée en ce que** le stator (16) peut fonctionner au-dessus d'une tension maximale de sortie du convertisseur (22) lorsqu'il fonctionne en mode à faible champ.

4. Machine électrique selon l'une des revendications précédentes, **caractérisée en ce que** deux côtés (42) de bobine (34) de phases différentes sont disposés chaque fois dans une rainure (33).

5. Machine électrique selon l'une des revendications 1 à 4 qui précèdent, **caractérisée en ce qu'**un côté (42) d'une bobine (34) est disposé chaque fois dans une rainure (33).

6. Machine électrique selon l'une des revendications précédentes, **caractérisée en ce qu'**un agent de refroidissement peut être passé dans au moins une rainure (33).

7. Machine électrique selon l'une des revendications précédentes, **caractérisée en ce qu'**un entrefer (28) situé entre le rotor (19) et une dent (31) du stator (16) est évasé en direction des extrémités périphériques de la dent (31).
